# EUROPEAN PATENT SPECIFICATION

(11) **EP 1 016 157 B1**
(45) Date of publication and mention of the grant of the patent: **26.11.2003**
(21) Application number: 98935162.2
(22) Date of filing: 22.07.1998
(51) Int. Cl.: H01Q 1/24

(54) **TELEPHONE WITH MULTIPLE ANTENNA CONFIGURATION**
MEHRANTENNENANORDNUNG FÜR EIN TELEFON
TELEPHONE A DIVERSES CONFIGURATIONS D'ANTENNES

(30) Priority: 22.07.1997 GB 9715500
(43) Date of publication of application: 05.07.2000
(73) Proprietor: Matsushita Electric Industrial Co., Ltd., Kadoma-shi, Osaka (JP)
(72) Inventor: GUMUSSOY, Murat, Reading, Berkshire RG2 7PW (GB)
(74) Representative: Dawson, Elizabeth Ann
(86) International application number: GB9802154
(87) International publication number: WO99005753

(56) References cited:
- EP-A- 0 352 787
- EP-A- 0 588 271
- EP-A- 0 713 262
- US-A- 5 541 609
- US-A- 5 606 733

## Description

Mobile Communication is expanding at a very rapid pace and the use of mobile telephone handsets for many forms of communication systems such as cellular, cordless and satellite is gaining great public acceptance.

The performance of the antenna of a mobile telephone handset has great impact on the quality of the RF link and the battery life. The greater the gain of an antenna in a given direction the better the signal to noise ratio will be at the receiver resulting in a more reliable RF link. This also means that a handset with abetter gain antenna can be used at distances from the base station greater than the one with less antenna gain if all the other performance parameters are the same. In fringe areas where the signal levels are low, the handset with the greater gain will perform better in terms of maintaining the link.

Another important parameter that is being investigated more carefully in recent years is the effect of the electromagnetic waves radiated from a mobile handset when it is used in very close proximity to the human head. An omnidirectional antenna used right next to the head will have a great portion of its power absorbed into the head. This is an undesirable situation for two reasons: firstly, the ideal requirement is that no power should be wasted in the antenna or in any object in its close proximity. If much power is absorbed by the head then there will be less power for radiating which will result in reduced communication range. It is quite common that when a hand held is positioned next to the head its gain can be reduced by as much as 10 dB in certain directions which could easily more than halve the range that could otherwise have been possible to achieve. Secondly, the effect of electromagnetic radiation from mobile hand terminals on human health is a subject which is still being investigated very carefully. Therefore the less the power radiated into the human body the better.

Document EP-A-713 262 describes a portable communications transceiver comprising a combination of two monopole or dipole antennas, a switch, and a phase shifter, in order to achieve a directional radiation pattern, to adaptively direct the antenna pattern towards a base station. An alternative antenna pattern could be selected wherein a null is directed toward the user of the transceiver.

Document US-A-5 541 609 discloses an antenna for a personal communication device comprising a co-linear array of dipole antenna elements. The full array is active for reception. A proximity detector senses the proximity of the human body, and lowers the RF transmission power to those antenna elements in the array that are closest to the user's head.

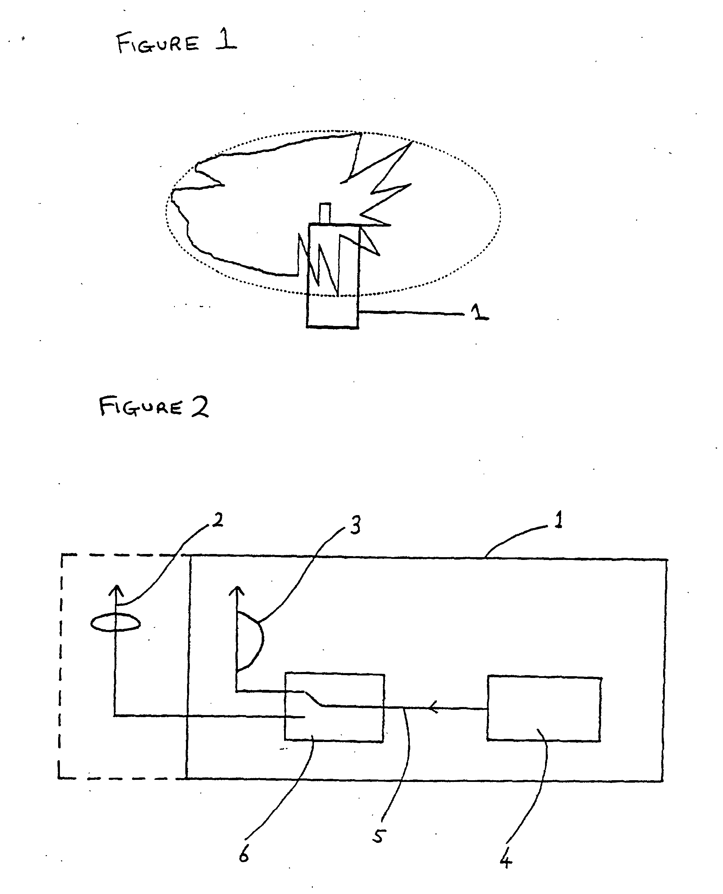

The property of omnidirectionality for antennas is an important requirement for a mobile handset as neither the user nor the handset has any knowledge of the direction of the base station with which the mobile handset is required to communicate. Whatever the orientation of the handset it will receive identical power levels from the base station in all directions and conversely the base station will receive identical power levels from the mobile handset irrespective of its orientation. This requirement will easily be met by the use of an omnidirectional antenna in the handset when the handset is free standing. However, the same handset will lose this omnidirectional property when it is placed next to the head. The head and the hand holding the handset will absorb much of the power transmitted from the antenna distorting the radiation pattern of the antenna significantly as shown in Figure 1.

Since any power radiated into the head will be significantly absorbed by the head it would be advantageous to use during hand held operation an antenna with a radiation pattern which minimises the radiation from the antenna in the direction of the head. By concentrating power in the direction away from the head it then becomes possible to increase the gain of the antenna in that direction. Therefore the power is radiated more effectively in the direction away from the head rather than being wasted in the head.

The present invention provides a telephone having two or more antennae, each for receiving and/or transmitting electromagnetic signals, and switch means operable to select an antenna or antennae combination to provide directional transmission in order to reduce radiation into the head of the user as set out in claims 1 and 2.

Thus, a telephone according to the invention is able to operate in a directional mode during hand held operation and omnidirectional mode during hands free operation. In the directional mode radiation would be directed away from the user's head, eg. outwardly from the telephone speaker or microphone.

A micro strip patch antenna, with its characteristic D-shape radiation pattern may be employed as a directional antenna. A telephone according to the invention may also include an omnidirectional antenna or alternatively, omnidirectionality may be provided by an array of directional antennae, such as "D-shape" antennae positioned back-to-back.

The switch means may be manually operable. For example, a telephone according to the invention may have a manual switch for selecting the appropriate antenna or antennae. As another example, the selection of the appropriate antenna or antennae could be carried out in response to the operator pressing a key or other manual switch on the telephone to initiate or receive a call.

Instead of being manually operable, the switch means may be automatically operable. For example, a proximity sensor may be provided for detecting the proximity of a human head. The appropriate antenna(e) would then be selected according to a signal from the proximity switch.

Alternatively, a telephone according to the invention may be equipped with means for detecting when it is transmitting voice messages (as opposed to its regular update messages), with the switch means being responsive to the detection means. Thus, directional coverage could be switched in when voice messages were being transmitted. Of course, this might not be suitable for a handset designed to transmit voice messages in "hands-free" operation.

Alternatively a telephone according to the invention may switch to directional operation either in response to the establishment of a call (two-way communication) or in response to the user requesting a call (dialling a number).

It is possible to select the directional pattern only at certain times whilst the telephone is in conversation mode. During a call, a mobile telephone handset receives and transmits signals in a rapid series of consecutive receive and transmit windows, whereby reception and transmission do not occur simultaneously. It may be desirable to select the directional radiation pattern only during transmit windows, and the omnidirectional pattern during receive windows. The resulfing advantage is that the omnidirectional response during receive windows improves the reception of the signal, but without unduly increasing the level of radiation in the direction of the user's head, since the received signals are considerably weaker in power than the transmitted signals which originate at the handset itself.

It follows from the foregoing that a telephone according to the invention may be arranged to operate in directional mode whenever a signal of any kind is being transmitted.

The expression "directional antenna" is intended to encompass any antenna with a null in its radiation pattern.

To summarise the foregoing, the use of antennas with a null in their radiation pattern can be utilised constructively for the dual purpose of minimising radiation into the head and also for maximising radiation in other directions.

While being converted into a constructive use for talk position, the loss of omnidirectionality is not desirable when the handset is freestanding. The requirement for the handset antenna when it is in freestanding position is as omnidirectional as possible. This requirement can be achieved by having a range of switchable antennae. An antenna or an antenna combination with directional characteristics would be used when the handset is in talk position and the antenna or a combination of antennae with omnidirectional characteristics would be used when the handset is freestanding. Switching between the antennas can be realised, as noted above, by means of a proximity switch capable of sensing when the handset is placed next to the head. The switch would switch the omnidirectional antenna into use when the handset is moved away from the head.

It will be appreciated that the expression "telephone handset" as used herein encompasses any communication device which is intended to be handheld.

An embodiment of the invention will now be described by way of example only and with reference to the accompanying drawings in which:
Figure 1 is a diagram comparing handset antenna radiation patterns in free space and in talk positions;
Figure 2 is a block diagram of a switchable antenna arrangement suitable for use in a telephone handset according to the invention;
Figures 3a and 3b illustrate a circuit board suitable for use in a telephone handset according to the invention in plan and side elevation respectively; and
Figure 4 is a block diagram of an alternative switchable antenna arrangement suitable for use in a telephone handset according to the invention.

Figure 1 has been briefly described above. The dotted line indicates the omnidirectional radiation typical when a telephone 1 is in free space and the solid line indicates the distorted radiation pattern which occurs when the telephone is held next to the head.

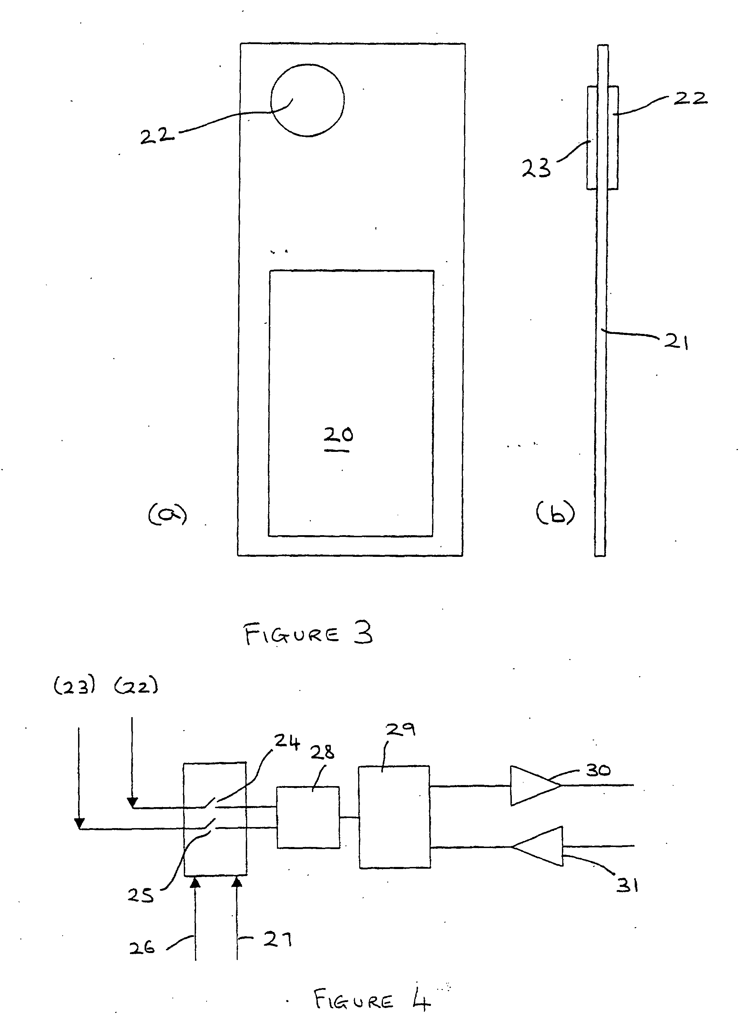

Figure 2 shows the telephone handset 1 having an omnidirectional antenna 2 and a directional or non-omnidirectional antenna 3 . The omnidirectional antenna may be an extendable antenna on the outside of the handset housing or, as indicated by the dotted lines, an internal antenna within the housing. Also within the housing of the handset 1, as well as the usual electronic circuitry, is a proximity sensor 4 which sends a control signal along line 5 to a switch 6. The operation of sensor 4 and switch 6 is such that when an adjacent object (e.g. a head) is detected by the sensor, the antenna 3 is operational and when no adjacent object is detected by sensor 4 the antenna 2 is operational.

The sensor 4 effectively generates a control signal which indicates whether the handset is next to the head or free-standing. This control signal is used to select the suitable antenna by means of the switch 6; the omnidirectional antenna for free-standing position and the directional antenna for talk position. The switch 6 is a low loss RF switch.

The omnidirectional antenna can be any of the standard omnidirectional antennae in common use. Retractable whip antennas and fixed helical antennas are two of the most commonly used antennae.

The directional antenna can be designed as a micro strip patch antenna. These antennas are also commercially available in small sizes suitable for use in small mobile handsets. As they have a D-shape radiation pattern the antenna gain can be greater than that achievable from a standard dipole antenna.

The micro strip patch antennas can be quite small to fit inside a handset. It is also feasible to combine two or three of these antennas to generate an omnidirectional pattern. The advantage of such a configuration would be increased gain over a dipole antenna and small size.

Figures 3a and 3b show a circuit board 21 for use in the telephone handset, in which two back-to-back disc antennae 22, 23 are provided, one on each side of the circuit board. In this case, each disc antenna has a hemispherical, known as "D-shape" radiation pattern, and so the two antennae can be used in combination to achieve an omnidirectional pattern. When only one antenna is selected, a D-shape, hemispherical radiation pattern is achieved. Alternatively, two micro strip antennae can be printed on the circuit board and used in the same back-to-back configuration.

In this example the antennae are located adjacent the telephone microphone, not shown, away from the keymat 20. The antenna used in the directional mode of communication is the one on the opposite side of the board to the speaker and microphone.

Figure 4 illustrates a switchable antenna arrangement suitable for use with the back-to-back antenna configuration shown in Figure 3. Each of the two antennae 22, 23 is selected by means of a switch 24, 25. In order to achieve an omnidirectional pattern. for example when the telephone is in idle mode in between calls, both switches 24, 25 may be closed.

In order to achieve a directional pattern, the switch 24 corresponding to the antenna 22 which is situated, in use, nearest the user's head, is opened, and the other switch 25 closed. In this way, only the antenna facing away from the user's head is selected, and a D-shaped radiation pattern is generated, whereby electromagnetic radiation is directed away from the head.

This directional radiation pattern may be selected in response to the telephone entering conversation mode (i.e. when a call is made or received).

In the example illustrated in Figure 4, the switches 24 and 25 are controlled in response to receive and transmit control lines 26, 27 respectively. The switches are connected via matching circuit 28 and duplexer 29 to the low noise receive amplifier 30 and transmitter 31. Thus, when transmitter 31 is operational, switch 25 is closed and switch 24 is open whereby only antenna 23 is operational during transmission of signals.

It will be appreciated from the foregoing that non-omnidirectional antennae, either singly or in combination, can be used to minimize the SAR (Specific Absorption Rate) in the body and also to maximize the antenna efficiency, whilst omnidirectional coverage using one omnidirectional antenna or a combination of non-omnidirectional antennae in freestanding operation can maximize the radio coverage of the handset so that it has equal ability to communication with any of the surrounding base stations irrespective of its orientation.

## Claims

1. A telephone (1) having two or more antennae (2,3,22,23), each for receiving and/or transmitting electromagnetic signals, and switch means (6,24,25) that selects an antenna or antennae combination, **characterised in that** at least one antenna is a directional antenna (3,22,23) oriented to provide directional transmission of radiation away from the users head; and
said switch means selects said directional antenna in response to the user's head being in close proximity to the telephone.

2. A telephone (1) having two or more antennae (2,3,22,23), each for receiving and/or transmitting electromagnetic signals, and switch means (6,24,25) that selects an antenna or antenna combination **characterised in that** at least one antenna is a directional antenna oriented to provide directional transmission of radiation away from the user's head; and
said switch means selects said directional antenna in response to establishment of a call.

3. A telephone as claimed in Claim 1, wherein said switch means includes a proximity sensor (4) for detecting the proximity of a human head.

4. A telephone as claimed in any preceding claim, wherein said directional antenna is a micro-strip patch antenna.

5. A telephone as claimed in any preceding claims, wherein said two or more antennas include an omni directional antenna (2).

6. A telephone as claimed in any preceding claim, wherein two or more antennae are used in combination to generate an omni directional transmission and/or reception pattern.

7. A telephone as claimed in Claim 6, wherein two directional antennas are positioned back to back.

8. A telephone as claimed in any preceding claim, wherein the switch means is manually operable.

9. A telephone as claimed in any preceding claim, wherein the switch means is operable to provide directional transmission and omni directional reception of signals.

10. A telephone as claimed in any preceding claim wherein the antennae are located inside the telephone handset

## Patentansprüche

1. Telefon (1 ) mit zwei oder mehr Antennen (2, 3, 22, 23), die jeweils zum Empfangen und/oder Senden elektromagnetischer Signale dienen, und einer Schalteinrichtung (6, 24, 25), die eine Antenne oder Antennenkombination auswählt, **dadurch gekennzeichnet, dass** wenigstens eine Antenne eine Richtantenne (3, 22, 23) ist, die so ausgerichtet ist, dass sie gerichtetes Senden von Strahlung vom Benutzer des Kopfes weg ermöglicht; und
die Schalteinrichtung die Richtantenne in Reaktion darauf auswählt, dass der Kopf des Benutzers nahe an dem Telefon ist.

2. Telefon (1 ) mit zwei oder mehr Antennen (2, 3, 22, 23), die jeweils zum Empfangen und/oder Senden elektromagnetischer Signale dienen, und einer Schalteinrichtung (6, 24, 25), die eine Antenne oder Antennenkombination auswählt, **dadurch gekennzeichnet, dass** wenigstens eine Antenne eine Richtantenne ist, die so ausgerichtet ist, dass sie gerichtetes Senden von Strahlung vom Kopf des Benutzers weg ermöglicht; und
die Schalteinrichtung die Richtantenne in Reaktion auf Herstellung eines Rufs auswählt.

3. Telefon nach Anspruch 1, wobei die Schalteinrichtung einen Näherungssensor (4) enthält, der die Nähe eines menschlichen Kopfes erfasst.

4. Telefon nach einem der vorangehenden Ansprüche, wobei die Richtantenne eine Mikrostreifenleitungsantenne ist.

5. Telefon nach einem der vorangehenden Ansprüche, wobei die zwei oder mehr Antennen eine Rundstrahlantenne (2) enthalten.

6. Telefon nach einem der vorangehenden Ansprüche, wobei zwei oder mehr Antennen in Kombination eingesetzt werden, um eine Rundstrahl-Sende- und/oder Empfangs-Charakteristik zu erzeugen.

7. Telefon nach Anspruch 6, wobei zwei Richtantennen Rücken an Rücken angeordnet sind.

8. Telefon nach einem der vorangehenden Ansprüche, wobei die Schalteinrichtung manuell betätigt werden kann.

9. Telefon nach einem der vorangehenden Ansprüche, wobei die Schalteinrichtung so betätigt werden kann, dass sie gerichtetes Senden und Rundstrahlempfang von Signalen ermöglicht.

10. Telefon nach einem der vorangehenden Ansprüche, wobei sich die Antennen im Inneren des Telefon-Handapparates befinden.

## Revendications

1. Téléphone (1) comportant deux antennes ou plus (2, 3, 22, 23), chacune pour recevoir et/ou émettre des signaux électromagnétiques, et un moyen de commutation (6, 24, 25) qui sélectionne une antenne ou une combinaison d'antennes, **caractérisé en ce que** au moins une antenne est une antenne directionnelle (3, 22, 23) qui est orientée pour assurer une transmission de rayonnement directionnelle à distance de la tête d'utilisateurs ; et
ledit moyen de commutation sélectionne ladite antenne directionnelle en réponse au fait que la tête d'utilisateur est très près du téléphone.

2. Téléphone (1) ) comportant deux antennes ou plus (2, 3, 22, 23), chacune pour recevoir et/ou émettre des signaux électromagnétiques, et un moyen de commutation (6, 24, 25) qui sélectionne une antenne ou une combinaison d'antennes, **caractérisé en ce que** au moins une antenne est une antenne directionnelle qui est orientée pour assurer une transmision de rayonnement directionnelle à distance de la tête d'utilisateurs ; et
ledit moyen de commutation sélectionne ladite antenne directionnelle en réponse à l'établissement d'un appel.

3. Téléphone selon la revendication 1, dans lequel ledit moyen de commutation inclut un capteur de proximité (4) pour détecter la proximité d'une tête d'être humain.

4. Téléphone selon l'une quelconque des revendications précédentes, dans lequel ladite antenne directionnelle est une antenne patch micro-bande.

5. Téléphone selon l'une quelconque des revendications précédentes, dans lequel lesdites deux antennes ou plus incluent une antenne omnidirectionnelle (2).

6. Téléphone selon l'une quelconque des revendications précédentes, dans lequel deux antennes ou plus sont utilisées en combinaison pour générer un motif d'émission et/ou de réception omnidirectionnel.

7. Téléphone selon la revendication 6, dans lequel deux antennes directionnelles sont positionnées dos à dos.

8. Téléphone selon l'une quelconque des revendications précédentes, dans lequel le moyen de commutation peut être actionné manuellement.

9. Téléphone selon l'une quelconque des revendications précédentes, dans lequel le moyen de commutation peut être actionné pour assurer une émission directionnelle et une réception omnidirectionnelle de signaux.

10. Téléphone selon l'une quelconque des revendications précédentes, dans lequel les antennes sont localisées à l'intérieur du combiné de téléphone.
